# EUROPÄISCHE PATENTSCHRIFT

(11) **EP 1 066 222 B1**
(45) Veröffentlichungstag und Bekanntmachung des Hinweises auf die Patenterteilung: **07.11.2001**
(21) Anmeldenummer: 99908900.6
(22) Anmeldetag: 15.02.1999
(51) Int. Cl.: C02F 3/12, B01D 21/06, C02F 1/00, B01D 21/00, B01D 21/24

(54) **SEDIMENTATIONSBECKEN MIT RUNDER FORM ZUM ABSCHEIDEN VON SCHLAMM AUS ABWASSER**
ROUND SETTLING TANK FOR SEPARATING SLUDGE FROM WASTE WATER
BASSIN DE SEDIMENTATION ROND SERVANT A SEPARER DES BOUES CONTENUES DANS DES EAUX RESIDUAIRES

(30) Priorität: 19.02.1998 DE 19806858
(43) Veröffentlichungstag der Anmeldung: 10.01.2001
(73) Patentinhaber: Emschergenossenschaft Lippeverband, 45128 Essen (DE)
(72) Erfinder: SCHLEGEL, Sigurd, D-47441 Moers (DE); STEIN, Andreas, D-48249 Dülmen (DE)
(74) Vertreter: Kaewert, Klaus
(86) Internationale Anmeldenummer: EP9900979
(87) Internationale Veröffentlichungsnummer: WO9942409

(56) Entgegenhaltungen:
- DE-A- 3 837 284
- US-A- 3 025 966
- US-A- 3 523 889
- US-A- 4 278 541
- US-A- 4 346 005

## Beschreibung

Die Erfindung betrifft ein Sedimentationsbecken mit runder Form zum Abscheiden von Schlamm aus Abwasser,
mit einem Zulauf für das Abwasser,
mit einem Abzug für den sich an der Beckensohle in einer Eindick- und Räumschicht absetzenden Schlamm und
mit einem Ablauf für das Klarwasser,
wobei der Zulauf an der Beckensohle mündet und
wobei die Hauptströmungsrichtung des Abwassers radial nach auußen oder radial nach innen gerichtet ist.

Solche Sedimentationsbecken werden insbesondere im Bereich der Klärtechnik eingesetzt. Sie können als Nach-, Zwischen- und/oder Grobklärbecken oder dergleichen Verwendung finden. Ziel ist dabei, daß sich der Schlamm aus dem Abwasser durch Schwerkrafteinwirkung an der Sohle des Beckens absetzt. Für die Absetzbewegung ist eine geringe Geschwindigkeit des Schlammes von Vorteil.
Bei den bekannten runden Becken wird das Abwasser mittig zugeführt. Die Abzugseinrichtung für Schlamm befindet sich ebenfalls in der Mitte, die Abzugseinreichung für das Abwasser außen. Desgleichen ist bekannt, für den Schlammabzug Saugräumer einzusetzen, bei denen die Schlammabzugsrohre entlang der Räumerbrücke angeordnet sind.

Die bekannten Becken haben sich bewährt.
Gleichwohl hat sich die Erfindung die Aufgabe gestellt, den Wirkungsgrad zu verbessern. Dabei geht die Erfindung von der Erkenntnis aus, daß
* in den bekannten runden Becken erhebliche Strömungsturbulenzen
   auftraten, die abhängig sind von:
   der Beckenhöhe
   der Anordnung und Ausbildung des Abwasserzulaufes
   der Anordnung und Ausbildung des Abzuges von Schlamm
   der Anordnung und Ausbildung des Ablaufes von Klarwasser

Ferner geht die Erfindung davon aus, daß
* im Bereich des Zulaufes eine turbulente Trennzone entsteht. Darüber hinaus
* sich in dem Becken eine Schichtung ergibt, wobei
* die unterste Schicht als Eindick- oder Räumzone angesprochen werden kann
* die darüber liegende Schicht als Speicherzone angesprochen werden kann
* die oberste Schicht als Klarwasserzone angesprochen werden kann und
* daß die Abgrenzung der verschiedenen Schichten nicht eindeutig ist, sondern ein fließender Übergang gegeben ist und die Schichtendicke in starkem Maße von den gleichen Faktoren beeinflußt wird, die auch die Turbulenzen zumindest mitbestimmen

Nach der Erfindung kommt der Turbulenz in der Trennzone maßgebende Bedeutung zu. Der Im Abwasser enthaltene Schlamm enthält Mikropartikel, die in dem turbulenten Bett sich zu Makroflocken vereinen und in der Eindickschicht verbleiben. Das von Feststoffen befreite Wasser tritt nach oben aus, ohne daß die Makroflocken mitgerissen werden.

Die Erfindung nutzt diese Erkenntnis, indem das Abwasser in Höhe der Eindick- und Räumschicht über bzw. an der Beckensohle eingeleitet wird. Dabei bildet sich eine besondere Trennzone über der Beckensohle aus. Hiermit wird zwar die zur Verfügung stehende Fläche der Eindick- und Räumschicht etwas verringert, gleichwohl ist kein verringerter Wirkungsgrad zu befürchten. Vielmehr entsteht eine viel höhere Trennleistung. Die Grenzschicht der Trennzone verläuft im Strömungsquerschnitt gesehen etwa auf zwei Viertelkreisen, von denen der erste an dem Abwassereintritt, vorzugsweise horizontal beginnt und vertikal in den zweiten Viertelkreis übergeht, der sich an den ersten Viertelkreis so anschließt, daß beide Viertelkreise etwa eine S-Form bilden. In radialer Richtung erstreckt sich die S-Form bei den derzeit verkomrnender. Beckenabmessungen auf eine Länge bis 3 m, zumeist auf eine deutliche kürzere Länge.

Die Grenzschicht kennzeichnet den Weg der in die Eindick- und Räumschicht strömenden Makroflocken. Im vorderen Bereich findet die Bildung der Makroflocken statt, im hinteren Bereich findset die Trennung des Schlammes von Klarwasser statt.

Die Erfindung löst sich von der Vorstellung, daß das Abwasser möglichst langsam in die Klärbecken einströmen müsse, um das Absinken der Feststoffe zu erleichtern. Im Gegenteil sucht die Erfindung eine Mindestalrbulenz, um einen Kontakt der Mikroflocken herbeizuführen.

Einen Beleg für die bisherige Enwicklungsrichtung bildet die GB 2293988 A (1). Darin wird eine Beruhigungsbox zur Beruhigung der Eintrittsströmung in Sedimentationsbehältern vorgeschlagen. Die Beruhigungsbox selbst ist kein Sedimentationsbecken, schon gar nicht für Abwasser. Das ergibt sich für den Fachmann beim ersten Blick, weil in dem Sedimentationsbecken für Abwasser so viel Schlamm anfallt, daß eine Schlammräumung unverzichtbar ist. Der Beruhigungsbox fehlt die Schlammräumung.
Im übrigen zeigt die Druckschrift (1) an keiner Stelle, daß daran gedacht ist, das anströmende Abwasser in den abgesetzten Schlamm, nämlich in die Eindick- und Räumschicht zu lenken.

Die erfindungsgemäße Trennzone hat kann unabhängig vom Rundbecken auch auf andersartige Becken angewendet werden.

Außerhalb der Trennzone ist die Erfindung, wie auch andere Lösungen, um eine möglichst gering turbulente Strömung bemüht.

Die überraschende Erhöhung der Trennleistung durch die erfindungsgemäße Anordnung der Trennzone kann in verschiedener Hinsicht genutzt werden. Z.B. können vorhandene Becken mit höherer Leistung gefahren werden. Neue Becken können mit geringerer Tiefe gebaut werden, d.h. mit kleinerem Volumen gleiche Trennleistung bringen.

Übliche Becken besitzen erhebliche Tiefen. Zum Teil bedingt die große Tiefe eine Anordnung der Beckensohle unterhalb des Grundwasserspiegels. Dann kommen zu den oben erläuterten Problemen noch weitere bauliche Schwierigkeiten.

Der erfindungsgemäße Abwasserzulauf erfolgt primär an der Beckensohle. Gegenüber dem herkömmlichen Abwasserzulauf ist die erfindungsgemäße Anordnung des Abwasserzulaufes deutlich niedriger. Das Abwasser wird damit in Höhe der Eindick- und Räumschicht turbulent eingespeist. Im Unterschied zu herkömmlichen Becken wird durch diese Anordnung des Abwasserzulaufes eine nach unten gerichtete Strömung vermieden. Das trägt in erheblichem Umfang zu den erfindungsgemäßen Vorteilen bei.

Es liegt im Rahmen der Erfindung, wenn der Abwasserzulauf nicht unmittelbar an der Beckensohle, sondern innerhalb der Eindick- und Räumschicht angeordnet ist.

Das Abwasser wird vorzugsweise so aufgegeben, daß es sich möglichst radial und gleichmäßig in die Eindick- und Räumschicht verteilt. Wahlweise ist eine zentrische Anordnung des Zulaufes von Abwasser vorgesehen. Alternativ kann das Abwasser auch am Beckenrand zugeführt werden.
Günstig ist, die Zulaufströmung in die radiale Richtung zu zwingen. Die erfindungsgemäße Richtungsgebung der Zulaufströmung wird wahlweise durch eine Spaltbildung über der Beckensohle erreicht.

Es liegt auch im Rahmen der Erfindung, wenn kein umlaufender Spalt sondern Eintrittsschlitze vorgesehen sind, die sich zu einem umlaufenden Band/Kette aneinanderreihen. Der Spalt bzw. die Schlitze sind wahlweise gleichförmig oder ungleichförmig.

Der insbesondere umlaufend vorgesehene Spalt/Schlitz kann eine Höhe bis 50 cm aufiveisen, vorzugsweise bis 10 cm.

Bei äußerer Zuleitung des Abwassers kann sich ein ringförmiger Zulaufquerschnitt als günstig erweisen, in den das Abwasser tangential eintritt, um sich zunächst durch den Ring auf dem Umfang zu verteilen und anschließend nach innen auszutreten. Statt eines tangentialen Zulaufes können auch mehrere Einzelzuläufe angewendet werden.

Die Strömungsgeschwindigkeit innerhalb des Beckes soll ein bestimmtes Maß nicht überschreiten und unterschreiten. Ausgangsmaß der Strömungsgeschwindigkeit ist der Abwasserzulauf im Spalt. In dem Abwasserzulauf soll die Geschwindigkeit ein Maß von 20 cm nicht überschreiten. Vorzugsweise liegt die Strömungsgeschwindigkeit zwischen 5 und 10 cm pro Sekunde.

Zur Schlammräumung können herkömmliche Schlammräumer, z.B. ein Schildräumer, verwendet werden. Übliche Schildräumer bestehen aus einem Schild, das an der Beckensohle im Kreis bewegt wird und den abgesetzten Schlamm einem Schlammabzug zuführt.
Besser als ein herkömmlicher Schildräumer ist im vorliegenden Fall ein neuer an das System speziell angepaßter Schlammräumer.

Im Sinne der erfindungsgemäßen Strömungsführung ist es von Vorteil. wenn das Schild zur Beckenaußenkante räumt und dort die Pumpe oder ein Heber angeordnet ist. Damit wird sichergestellt, daß der Schlamm durch den Schild in radialer Richtung weiter nach außen bewegt wird und keine Schlammbewegung entsteht, die der Abwasserbewegung entgegen gerichtet ist.
Anstelle der Schiammbewegung nach außen kann auch mittels des Schildes eine Schlammbewegung nach innen oder alternativ sowohl nach innen und außen verursacht werden.
Bei allen Räumvorgängen kann die Beckensohle eben oder auch in Richtung der Schlammbewegung geneigt sein. Die Neigung beträgt maximal 20 Grad zur Horizontalen.

Nach der Erfindung ist es möglich, die Pumpe oder den Heber auch so anzubringen, daß durch die den Pumpensog und/oder den Hebersog die Bewegungsrichtung des Schlammes eine Änderung erfährt. Das kann besonders sinnvoll bei geneigter Sohlenanordnung sein.

Bei geneigter Anordnung ergibt sich eine Trichterform der Beckensohle, wobei die Trichterspitze bei außen angeordnetem Schlammabzug bzw. einem im Abstand von der Beckenmitte angeordnetem Schlammabzug in der Draufsicht einen Kreisring bildet.

Durch den Heber bzw. durch die Pumpe wird der Schlamm in strömungsschonender Weise von der Beckensohle abgezogen.

Eine andere Möglichkeit zum strömungsschonenden Schlammabzug wird durch Saugräumer gebildet. Dabei sind mehrere Saugräumen in Reihe angeordnet und wie ein Schild im Kreis in dem Rundbecken bewegbar. Die Saugräumer saugen den Schlamm an Ort und Stelle ab, so daß keine wesentliche Schlammbewegung durch den Räumer verursacht wird.

Vorzugsweise besitzt jeder Saugräumer einen breiten Saugkopf. Die Saugkopfbreite beträgt bis 3,5 m und hat vorzugsweise die Form einer Staubsaugerdüse. Die Saugräumer sollen nebeneinander angeordnet sein und den Abstand zwischen der Trennzone und dem Beckenwand (bei mittiger Abwasserzuführung) bzw. den Abstand zwischen der Trennzone und der Beckenmitte (bei Abwasserzuführung von außen) ausfüllen.

Im Anschluß an die Durchtrittsströmung 7 bildet sich eine Trennzone. Die Grenzschicht 30 der Trennzone ist strichpunktiert eingezeichnet und zeigt einen S-förmigen Verlauf. Die Trennzone findet sich innerhalb der Grenzschicht 30. Unterhalb *der* Trennzone befindet sich die Eindick- und Räurnschicht 11.
Im vorderen Teil der Trennzone besteht eine turbulente Strömung. Durch die turbulente Strömung finden sich die Mikroflocken und bilden nach Berührung Makroflocken mit trägem Bewegungsverhalten. Die Makroflocken wandern in die Eindick- und Räumschicht 11. Das Wasser steigt nach oben.
Der Schlamm der Eindick- und Räumschicht wird mittels Saugräumer 8 nach oben abgezogen. Die Saugräumer 8 besitzen unten eine Düse 9, die im Ausführungsbeispiel eine Breite von 3 m hat. Mit der Düse wird der Schlamm unmittelbar auf der Beckensohle erfaßt und strömungsschonend entfernt.

Alle Saugräumer sind in nicht dargestellter Form an einer Brücke befestigt, die über dem Rundbecken umläuft.

Das Klarwasser wird über einen Überlauf IO am Beckenrand abgezogen.

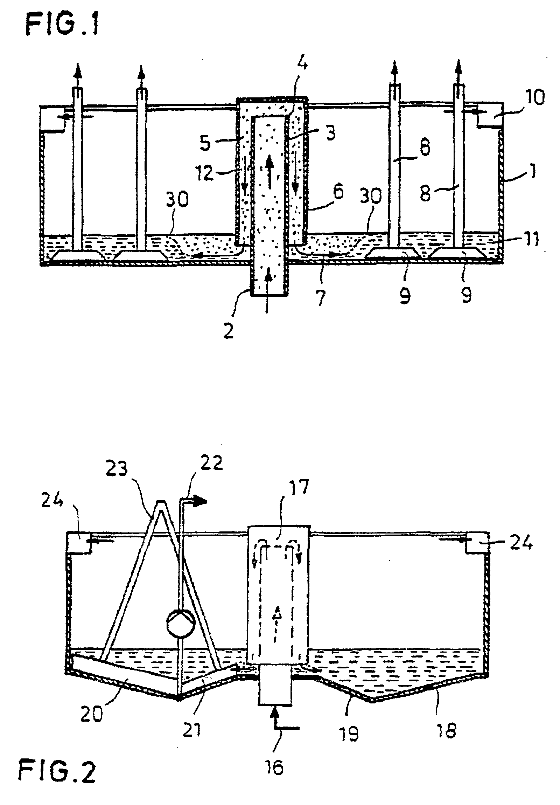

Das Ausführungsbeispiel nach Fig. 2 besitzt den gleichen Abwasserzulauf 16 und Rohrleitung 17 wie das Ausführungsbeispiel nach Fig. 1, so daß die gleiche Durchtrittsströmung 19 wie bei dem Ausführungsbeispiel nach Fig. 1 an der Beckensohle von der Mitte her in das Becken eintritt.
Im Unterschied zum Ausführungsbeispiel nach Fig. 1 sind eine mehrfach geneigte Beckensohle und zum Abzug des Schlammes ein besonderes Räumschild 2 vorgesehen.
Die Beckensohle bildet durch zweifache Neigung einen ringförmigen Trichter. Dabei ist der innere Teil 19 der Beckensohle nach außen abfallend geneigt und der äußere Teil 18 der Beckensohle nach innen abfallend geneigt.
Der Schlammabzug erfolgt an der tiefsten Stelle des ringformigen Trichters mittels eines Hebers 22, der an der Tragkonstruktion 23 des Räumschildes befestigt ist. Die Tragkonstruktion 23 ist an einer nicht dargestellten umlaufenden Brücke befestigt.

Im Anschluß an die Durchtrittsströmung 7 bildet sich eine Trennzone. Die Grenzschicht 30 der Trennzone ist strichpunktiert eingezeichnet und zeigt einen S-förmigen Verlauf. Die Trennzone findet sich innerhalb der Grenzschicht 30. Unterhalb der Trennzone befindet sich die Eindick- und Räumschicht 11.
Im vorderen Teil der Trennzone besteht eine turbulente Strömung. Durch die turbulente Strömung finden sich die Mikroflocken und bilden nach Berührung Makroflocken mit trägem Bewegungsverhalten. Die Makroflocken wandern in die Eindick- und Räumschicht 11. Das Wasser steigt nach oben.
Der Schlamm der Eindick- und Räumschicht wird mittels Saugräumer 8 nach oben abgezogen. Die Saugräumer 8 besitzen unten eine Düse 9, die im Ausführungsbeispiel eine Breite von 3 m hat. Mit der Düse wird der Schlamm unmittelbar auf der Beckensohle erfaßt und strömungsschonend entfernt.

Alle Saugräumer sind in nicht dargestellter Form an einer Brücke befestigt, die über dem Rundbecken umläuft.

Das Klarwasser wird über einen Überlauf 10 am Beckenrand abgezogen.

Das Ausführungsbeispiel nach Fig. 2 besitzt den gleichen Abwasserzulauf 16 und Rohrleitung 17 wie das Ausführungsbeispiel nach Fig. 1, so daß die gleiche Durchtrittsströmung 19 wie bei dem Aus führungsbeispiel nach Fig. 1 an der Beckensohle von der Mitte her in das Becken 15 eintritt.
Im Unterschied zum Ausführungsbeispiel nach Fig. 1 sind eine mehrfach geneigte Beckensohle und zum Abzug des Schlammes ein besonderes Räumschild vorgesehen.
Die Beckensohle bildet durch zweifache Neigung einen ringförmigen Trichter. Dabei ist der innere Teil 19 der Beckensohle nach außen abfallend geneigt und der äußere Teil 18 der Beckensohle nach innen abfallend geneigt.
Der Schlammabzug erfolgt an der tiefsten Stelle des ringförmigen Trichters mittels eines Hebers 22, der an der Tragkonstruktion 23 des Räumschildes befestigt ist. Die Tragkonstruktion 23 ist an einer nicht dargestellten umlaufenden Brücke befestigt.

Das Räumschild ist gegenüber herkömmlichen Räumschilden verkürzt, so daß ein Zwischenraum zwischen dem Schild und der Abwasseraufgabe für die Bildung der Trennzone gelassen ist.
Das Räumschild besitzt zwei unterschiedliche Teile 20 und 21. Beide Teile 20 und 21 sind dem anfallenden Schlamm auf den Flächen 18 und 19 angepaßt. Dabei ergibt sich für das innere Teile 21 eine deutlich geringere Höhe als für das äußere Teil 20.

Der Heber zieht den Schlamm nach oben hin ab. Der Schlamm gleitet an dem entsprechend angestellten Räumschild entlang zur Ansaugöffnung des Hebers. Die Stellung des Räumschildes ist dadurch gekennzeichnet, daß das in der Zeichnung linke Ende des Schildes bei einer Drehung im Uhrzeigersinn in Drehrichtung auf einem Radius vor dem in der Zeichnung rechten Ende liegt.
Der dargestellte Schild ist im übrigen gerade, in anderen Ausführungsbeispielen hat der Schild eine gebogene Form.

Der Klarwasserabzug ist mit 24 bezeichnet.

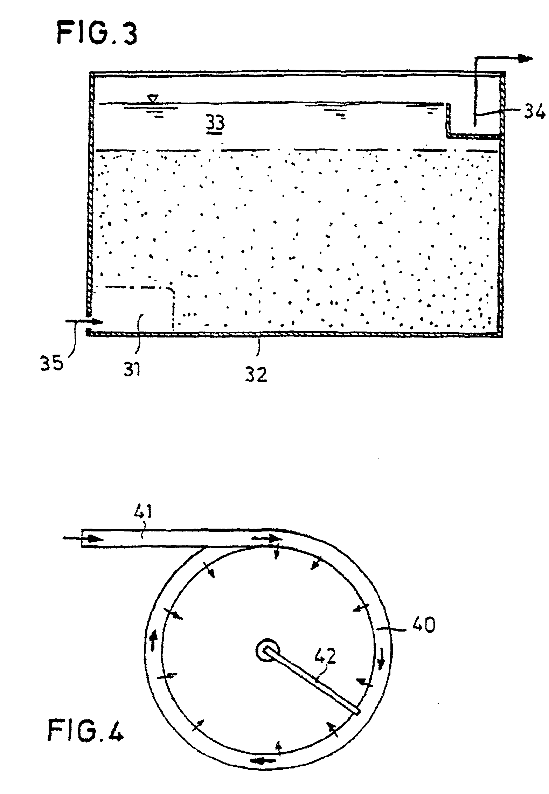

Fig. 3 zeigt eine Systemdarstellung mit dem zentrischen Abwasserzulauf 35 an der Beckensohle 32 und dem Klarwasserablauf 34 am oberen Beckenrand. Mit dem Klarwasserablauf 34 korrespondiert die Klarwasserzone 33, mit dem Abwasserzulauf die Trennzone 31.

Fig. 4 zeigt ein Ausführungsbeispiel mit einer außen liegenden Abwasseraufgabe. Die Abwasseraufgabe besitzt eine tangentiale Zuführung 41 und bildet einen Ring 40, in dem sich das Abwasser verteilt, bevor es durch einen Spalt an der Beckensohle an der Beckensohle ausströmt. Im Unterschied zu den Ausführungsbeispielen nach Fig. 1 bis 3 findet sich die Trennzone außen am Beckenrand.
Aus dem Ring 40 tritt das Abwasser durch einen umlaufenden Spalt. Die nach innen weisenden Pfeile geben nur die Strömungsrichtung wieder und bilden kein Sinnbild für einzelne Strömungs
In Fig. 4 ist die umlaufende Brücke 42 schematisch dargestellt. Die Brücke 42 trägt das nicht dargestellte Räumschild.

In einem weiteren nicht dargestellten Ausführungsbeispiel bcfindet sich der Räumschild dicht an der mittig angeordneten Trennzone und der Heber dicht an dem Beckenrand. Zugleich ist der Schild anders angestellt, so daß der Schlamm nach außen gedrängt wird. Die Stellung des Schildes ist dann dadurch gekennzeichnet, daß das in der Zeichnung rechte Ende des Schildes bei einer Drehung im Uhrzeigersinn auf einem Radius vor dem linken Ende des Schildes liegt. Durch die Bewegung des Schlammes nach außen wird die ursprüngliche Bewegungsrichtung des in das Becken eintretenden Abwassers fortgesetzt und außerhalb der Trennzone ein weiterer Beitrag zur Strömungsberuhigung geleistet.

Die sich durch die Erfindung ergebenden wirtschaftlichen Vorteile müssen mit mindestens 10 DM pro EW bewertet werden.

## Patentansprüche

1. Sedimentationsbecken mit runder Form zum Abscheiden von Schlamm aus Abwasser, mit einem Zulauf für das Abwasser,
mit einem Abzug für den sich an der Beckensohle in einer Eindick- und Räumschicht absetzenden Schlamm und
mit einem Ablauf für das Klarwasser,
wobei der Zulauf an der Beckensohle mündet und
wobei die Hauptströmungsrichtung radial nach außen oder radial nach innen gerichtet ist,
**dadurch gekennzeichnet,**
**daß** sich an den Zulauf eine Trennzone anschließt, in der sich keine Räurneinrichtung befindet.

2. Becken nach Anspruch 1, **dadurch gekennzeichnet, daß** der Abwasserzulauf mittig oder außen am Beckenrand angeordnet ist.

3. Becken nach Anspruch 2, **dadurch gekennzeichnet, daß** der Abwasserzulauf durch einen ringförmigen Spalt oder durch ringförmig angeordnete Schlitze gebildet wird.

4. Becken nach Anspruch 3, **gekennzeichnet durch** gleichförmige oder ungleichförmige Spake oder Schlitze.

5. Becken nach Anspruch 3 oder 4, **gekennzeichnet durch** einen tangentialen Eintritt in den außen angeordneten ringförmigen Abwasserzulauf.

6. Becken nach einem der Ansprüche 1 bis 5, **gekennzeichnet durch** einen S-förmigen Verlauf der Grenzschicht (30) der Trennzone.

7. Becken nach Anspruch 1 oder 6, **gekennzeichnet durch** eine Ausdehnung der Trennzone in radialer Richtung bis 3m.

8. Becken nach Anspruch 3 bis 7, **gekennzeichnet durch** einen Abwasserzulauf (2) von unten mit einem Verlängerungsrohr (3) und einem darüber angeordneten, oben geschlossenen und sich zur Beckensohle hin erstreckenden Rohr oder Trichter, der zur Beckensohle einen Durchtrittsspalt für das Abwasser läßt.

9. Becken nach einem der Ansprüche 1 bis 8, **gekennzeichnet durch** mehrere nebeneinander und im Kreis **durch** das Becken (1) bewegbare Saugräumer (8).

10. Becken nach Anspruch 9, **gekennzeichnet durch** Saugdüsen (9) an den Saugräumern mit einer Breite bis 3,5 m.

11. Beaken nach Anspruch 10, **gekennzeichnet durch** ein im Becken im Kreis bewegtes Räumschild(2) mit einem Heber (21) und/oder Pumpe (22).

12. Becken nach einem der Ansprüche 9 bis 11, **dadurch gekennzeichnet, daß** die Schlammströmung am Räumschild (20) vom Einlauf bis zum Abzug die gleiche Richtung wie das in das Becken eintretende Abwasser hat.

13. Becken nach einem der Ansprüche 9 bis 11, dadurch gekermzeichnet, daß der Abzug zwischen der Trennzone und dem Beckenaußenrand oder zwischen der Trennzone und der Beckenmitte angeordnet ist.

14. Becken nach Anspruch 13, **dadurch gekennzeichnet, daß** der Schlamm von außen und von der Beckenmitte zum Abzug strömt.

15. Becken nach einem der Ansprüche 9 bis 14, **gekennzeichnet durch** unterschiedliche Räumschildhöhen.

16. Becken nach Anspruch 15, **gekennzeichnet durch** ein gestuftes Räumschild (20,21).

17. Becken nach Anspruch 16, **gekennzeichnet durch** Räumschildkanten, die parallel zur Beckensohle verlaufen.

18. Becken nach einem der Ansprüche 9 bis 17, **dadurch gekennzeichnet, daß** die Einrichtungen zum Schlammabzug an einer über dem Becken drehbaren Brücke befestigt sind.

## Claims

1. A round settling tank for separating sludge from waste water,
with an inlet for the waste water,
with a drain for the sludge being deposited on the bottom of the tank in a thickening and evacuation layer and
with an outlet for the clarified water,
wherein the inlet discharges at the base of the tank and
wherein the main direction of flow is directed radially outwards or radially inwards,
**characterised in that** a separation zone, in which there is no evacuation device, is adjacent to the inlet.

2. A tank according to Claim 1,
**characterised in that** the waste water inlet is disposed centrally or outside on the edge of the tank.

3. A tank according to Claim 2,
**characterised in that** the waste water inlet is formed by an annular gap or by annularly disposed slits.

4. A tank according to Claim 3,
**characterised by** uniform or non-uniform gaps or slits.

5. A tank according to Claim 3 or 4,
**characterised by** a tangential admission into the annular waste water inlet disposed on the outside.

6. A tank according to one of Claims 1 to 5,
**characterised by** an S-shaped course of the boundary layer (30) of the separation zone.

7. A tank according to Claim 1 or 6,
**characterised by** an enlargement of the separation zone in the radial direction up to 3 m.

8. A tank according to Claim 3 to 7,
**characterised by** a waste water inlet (2) from below, with an extension pipe (3) and a pipe or funnel disposed above it, closed at the top and extending towards the bottom of the tank, which at the bottom of the tank leaves a gap for the passage of the waste water.

9. A tank according to one of Claims 1 to 8,
**characterised by** several suction scrapers (8) which can move next to one another in a circle through the tank (1).

10. A tank according to Claim 9,
**characterised by** suction nozzles (9) at the suction scrapers with a width of up to 3.5 m.

11. A tank according to Claim 10,
**characterised by** a scraper blade (2), which moves in a circle in the tank, with a siphon (21) and/or pump (22).

12. A tank according to one of Claims 9 to 11,
**characterised in that** the flow of sludge at the scraper blade (20) from the inlet to the drain has the same direction as the waste water entering the tank.

13. A tank according to one of Claims 9 to 11,
**characterised in that** the drain is disposed between the separation zone and the outer edge of the tank or between the separation zone and the centre of the tank.

14. A tank according to Claim 13,
**characterised in that** the sludge flows from outside and from the centre of the tank to the drain.

15. A tank according to one of Claims 9 to 14,
**characterised by** different scraper blade heights.

16. A tank according to Claim 15,
**characterised by** a stepped scraper blade (20, 21).

17. A tank according to Claim 16,
**characterised by** scraper blade edges which run parallel to the base of the tank.

18. A tank according to one of Claims 9 to 17,
**characterised in that** the devices for the discharge of sludge are fixed to a bridge that can rotate above the tank.

## Revendications

1. Bassin de sédimentation de forme ronde, servant à séparer des boues contenues dans des eaux résiduelles,
- avec une alimentation en eau usée,
- avec une évacuation des boues s'étant déposées sur la sole du bassin, en une couche épaissie et à déblayer, et
- avec une évacuation pour l'eau claire,
l'alimentation débouchant à la sole du bassin, et la direction d'écoulement principal étant orientée radialement vers l'extérieur ou radialement vers l'intérieur,
**caractérisé par le fait qu'**à l'alimentation est raccordée une zone de séparation dans laquelle ne se trouve aucun dispositif de déblaiement.

2. Bassin selon la revendication 1, **caractérisé en ce que** l'alimentation en eau usée est disposée centralement ou extérieurement sur le bord du bassin.

3. Bassin selon la revendication 2, **caractérisé en ce que** l'alimentation en eau usée est formée par un intervalle annulaire ou bien par des fentes disposées en forme d'anneau.

4. Bassin selon la revendication 3, **caractérisé par** des intervalles ou des fentes à forme régulière ou à forme irrégulière.

5. Bassin selon la revendication 3 ou 4, **caractérisé par** une entrée tangentielle dans l'alimentation en eau usée annulaire disposée extérieurement.

6. Bassin selon l'une des revendications 1 à 5, **caractérisé par** une allure en forme de S de la couche limite (30) de la zone de séparation.

7. Bassin selon la revendication 1 ou 6, **caractérisé par le fait que** la zone de séparation s'étend radialement jusqu'à 3 m.

8. Bassin selon les revendications 3 à 7, **caractérisé par** une alimentation en eau usée (2) par le bas, avec un tube de prolongement (3) et un tube ou un entonnoir disposé au-dessus, fermé en partie haute et s'étendant jusqu'à la sole du bassin, tube ou entonnoir laissant substituer un intervalle de passage aux eaux usées, par rapport à la sole du bassin.

9. Bassin selon l'une des revendications 1 à 8, **caractérisé par** une pluralité de nettoyeurs aspirants (8), disposés les uns à côté des autres et déplaçables en cercle dans le bassin (1).

10. Bassin selon la revendication 9, **caractérisé par** des buses aspirantes (9), montées sur des nettoyeurs aspirants, d'une largeur allant jusqu'à 3,5 m.

11. Bassin selon la revendication 10, **caractérisé par** un bouclier de nettoyage (2), déplacé en trajectoire circulaire dans le bassin, muni d'un leveur de matière (21) et/ou d'une pompe (22).

12. Bassin selon l'une des revendications 9 à 11, **caractérisé en ce que** l'écoulement des boues sur le bouclier de nettoyage (20), de l'admission jusqu'à l'évacuation, est de la même direction que celui des eaux usées pénétrant dans le bassin.

13. Bassin selon l'une des revendications 9 à 11, **caractérisé en ce que** l'extraction est disposée entre la zone de séparation et le bord extérieur du bassin, ou entre la zone de séparation et le centre du bassin.

14. Bassin selon la revendication 13, **caractérisé en ce que** les boues s'écoulent depuis l'extérieur et depuis le centre du bassin vers l'extraction.

15. Bassin selon l'une des revendications 9 à 14, **caractérisé par** des hauteurs de bouclier de nettoyage différentes.

16. Bassin selon la revendication 15, **caractérisé par** un bouclier de nettoyage (20, 21) à éléments étagés.

17. Bassin selon la revendication 16, **caractérisé par** des arêtes de bouclier de nettoyage, s'étendant parallèlement à la sole.

18. Bassin selon l'une des revendications 9 à 17, **caractérisé en ce que** les dispositifs d'extraction des boues sont fixés sur un pont ou portique, susceptible de tourner au-dessus du bassin.
